# FASCICULE DE BREVET EUROPEEN

(11) **EP 3 709 793 B1**
(45) Date de publication et mention de la délivrance du brevet: **03.01.2024**
(21) Numéro de dépôt: 18822417.4
(22) Date de dépôt: 08.11.2018
(51) Int. Cl.: A01K 7/00, A01K 39/02

(54) **PROCÉDÉ ET INSTALLATION DE DOPAGE EN OXYGÈNE DES EAUX D'ABREUVEMENT D'ANIMAUX ET NOTAMMENT DES VOLAILLES**
VERFAHREN UND VORRICHTUNG DER SAUERSTOFFZUFUHR FÜR TRÄNKEN FÜR TIERE INSBESONDERE GEFLÜGEL
METHOD AND INSTALLATION FOR OXYGEN DOPING OF WATER FOR DRINKING ANIMALS, IN PARTICULAR POULTRY

(30) Priorité: 14.11.2017 FR 1760695
(43) Date de publication de la demande: 23.09.2020
(73) Titulaire: L'Air Liquide, Société Anonyme pour l'Etude et l'Exploitation des Procédés Georges Claude, 75007 Paris (FR); Air Liquide France Industrie, 75007 Paris (FR)
(72) Inventeur: COUSIN, Franck, 44250 Saint Brevin Les Pins (FR); IBARRA, Dominique, 91190 Gif-Sur-Yvette (FR); CAMPO, Philippe, 78180 Montigny Le Bretonneux (FR); LE DRU, Pauline, 49070 Beaucouzé (FR)
(74) Mandataire: Air Liquide
(86) Numéro de dépôt international: PCT/FR2018/052764
(87) Numéro de publication internationale: WO 2019/097142

(56) Documents cités:
- WO-A1-03/066070
- JP-A- S5 863 338
- US-A- 6 063 295
- US-A1- 2004 200 431

## Description

La présente invention concerne le domaine des élevages intensifs d'animaux, et notamment de volailles et de porcs.

On peut rappeler ici par exemple que pour qu'un poulet atteigne le poids de 1,5 kg, il fallait environ 120 jours en 1920, environ 44 jours en 1980 et environ 33 jours seulement en 1998.

Selon diverses études, des relevés expérimentaux dans de tels élevages montrent qu'à âge égal (49 jours), le poids moyen d'un poulet de chair a doublé entre 1967 et 1996. Par ailleurs, au cours des dernières années, la demande des consommateurs a évolué vers des animaux moins gras et des viandes de volaille prédécoupées.

Ces objectifs de production ont été atteints grâce à l'évolution des programmes nutritionnels et des conditions d'élevage, associée à la sélection génétique d'animaux à croissance rapide, avec un indice de consommation bas, un engraissement faible et un développement accru des masses musculaires.

La génétique, l'hygiène, la prophylaxie et l'amélioration des conditions d'élevage ont, depuis vingt ans, considérablement réduit la mortalité des volailles dans les élevages.

Et néanmoins, il est nécessaire de tenir compte des aspects suivants qui apparaissent dans toutes les études lancées sur le sujet :
- une croissance corporelle rapide augmente les besoins en oxygène et la production de chaleur.
- l'augmentation du rendement en masse pectorale accentue le déséquilibre entre le développement de la masse musculaire et celui d'autres tissus comme le rein, le coeur et les poumons. Dans les élevages actuels, l'évolution des caractéristiques de croissance s'accompagne quelquefois d'une augmentation de la fréquence des défaillances des systèmes cardiovasculaires et respiratoires, caractérisées par une recrudescence des "coups de chaleur", des syndromes de "mort subite" et des ascites (accumulation de liquide dans la cavité péritonéale).

On peut résumer les études disponibles dans ce domaine par le fait que l'oxygène est un facteur limitant qui peut contribuer à expliquer la fréquence des maladies cardio-vasculaires et respiratoires chez le poulet de chair. La comparaison de génotypes à vitesses de croissance variables montre que l'incidence des ascites et la vitesse de croissance élevées sont associées à une pression en oxygène basse et une pression en CO2 élevée dans le sang veineux. Une disponibilité insuffisante en oxygène semble donc être une cause principale des dysfonctionnements des appareils cardio-vasculaire et respiratoire chez les poulets à croissance rapide.

Ce qui précède démontre la nécessité de rétablir un équilibre entre les besoins métaboliques imposés par la sélection pour une croissance rapide, et l'aptitude du système respiratoire, fournisseur d'oxygène, à y répondre.

Une approche possible serait d'augmenter la teneur en oxygène dans l'environnement du poulet d'élevage, malheureusement les élevages intensifs nécessitent une forte ventilation pour évacuer la chaleur et l'humidité produite par les volatiles, et ainsi la consommation d'oxygène pour passer de 20,9 à 27 % par exemple serait rédhibitoire et pénaliserait définitivement la solution sur un plan économique.

Un des objectifs de la présente invention est alors de proposer une nouvelle solution de conditions d'élevage de telles volailles et porcins, apportant une solution aux problèmes pointés ci-dessus.

Pour cela, comme on le verra plus en détails dans ce qui suit, on propose selon la présente invention de doper l'eau d'abreuvement des animaux en oxygène dissous, et plus précisément d'augmenter au maximum la teneur en oxygène dissous des eaux d'abreuvement, i.e jusqu'à la saturation.

On s'attache de façon préférentielle à réaliser ce dopage d'oxygène de façon à réduire la perte d'oxygène entre l'opération de dopage et la consommation par les animaux, ceci en injectant l'oxygène au dernier moment juste avant la consommation par les volailles. L'utilisation d'un injecteur en ligne favorise l'obtention d'un tel résultat.

Pour la filière porcine, l'abreuvement représente le plus souvent 93,6 % du total de l'eau consommée dans un élevage naisseur-engraisseur, soit 1330 I par porc produit (14,5 I par kg de carcasse).

En élevage avicole, l'eau d'abreuvement des animaux représente le plus souvent près de 90 % de l'utilisation. Cela représente de 3,1 I à 5,0 I par volaille produite selon l'espèce considérée (du poulet export à la dinde).

On évalue que le besoin d'eau varie généralement entre 1,6 et 1,8 fois la consommation d'aliments.

L'eau des systèmes d'abreuvement industriels contient actuellement le plus souvent entre 5 et 8 mg d'oxygène par litre, l'objectif selon la présente invention est alors d'atteindre la saturation en oxygène de cette eau, préférentiellement grâce à une injection d'oxygène pur.

Il faut noter cependant que la température de l'eau est très variable suivant les installations considérées et qu'ainsi les quantités d'oxygène à ajouter devront être ajustées en conséquence.

Les quantités d'oxygène à ajouter à une eau pour la saturer, selon la température de cette eau, sont en effet bien répertoriées dans la littérature, et on peut dès lors considérer que compte tenu des températures d'eau couramment pratiquées dans de tels élevages, la quantité d'oxygène à ajouter sera généralement comprise entre 20 et 50 mg/l d'eau, mais le plus souvent sera voisine de 30 mg d'oxygène par litre d'eau.

L'invention concerne alors un procédé d'élevage d'animaux et notamment de volailles ou de porcins, où de l'eau est fournie aux animaux pour leur abreuvement, se caractérisant en ce que l'on dope l'eau d'abreuvement des animaux en oxygène dissous jusqu'à la saturation.

Comme on l'a signalé plus haut, la saturation d'une eau va dépendre de la qualité de l'eau, de la température, du temps de séjour de l'oxygène, de la vitesse de l'eau, mais ce sont des processus que l'homme du métier connait sans qu'il soit nécessaire de développer plus avant.

US6063295 est considéré comme l'état de la technique le plus proche de l'objet de l'invention.

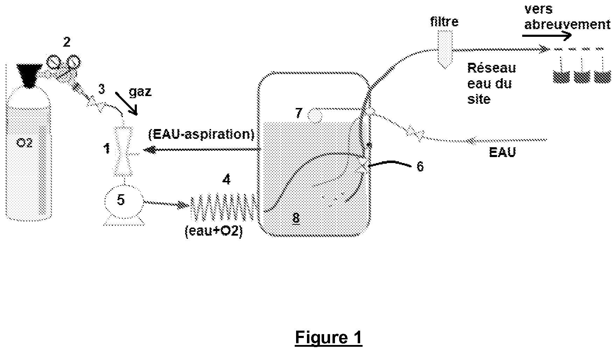

La figure 1 annexée illustre un mode de réalisation d'une installation convenant pour la mise en oeuvre de l'invention, et l'on peut noter la présence sur cette figure des éléments suivants :
- un injecteur 1, par exemple de type Venturi, permettant d'injecter un gaz dans de l'eau ;
- sur cet injecteur parviennent une ligne d'arrivée d'eau (« EAU ») et une ligne d'arrivée de gaz (« GAZ »), ligne de gaz ici reliée en sa partie amont à un stockage d'oxygène (représenté par une bouteille), ou d'un mélange de gaz comportant de l'oxygène, par exemple un mélange de 70 % d'oxygène et 30 % de CO₂.
- un détendeur 2 ;
- une vanne de réglage 3 (vanne de réglage gaz permettant, du fait de sa calibration, d'injecter une quantité de gaz choisie dans l'injecteur);
- un serpentin 4, la longueur du serpentin permet un temps de contact gaz / eau choisi, préférentiellement supérieur à 10 secondes, et de préférence situé entre 10 et 30 secondes ;
- une pompe de circulation d'eau 5 , la pompe à eau permet d'atteindre des vitesses d'eau élevées dans le serpentin ;
- un déverseur 6 ;
- une vanne flotteur 7 ;
- un bac d'eau à la pression atmosphérique (8).

Et cette proposition d'installation est tout à fait avantageuse pour limiter les investissements , puisqu'elle évite l'utilisation (onéreuse) d'un analyseur d'oxygène.

La ligne « EAU » arrivant par la droite alimente le bain en eau « fraîche » ou neuve, permettant ainsi que le bac soit d'abord rempli en eau avant le démarrage, la vanne flotteur 7 (par exemple du type chasse d'eau de WC) permet de maintenir un niveau d'eau constant dans le bac .

Ici, l'utilisation d'un bac d'eau à la pression atmosphérique, permet à la fois de maintenir une pression basse vers le réseau d'abreuvement et de maintenir une pression élevée dans le serpentin pour dissoudre l'oxygène.

Un déverseur maintient toujours la même pression dans le circuit quelle que soit la consommation d'eau.

Le système d'injection d'oxygène fonctionne lorsque le réseau d'abreuvement est alimenté en eau, en cas d'arrêt le système est coupé.

Du bassin part une ligne "eau aspiration" qui envoie de l'eau du bassin vers l'injecteur, c'est donc un mélange d'eau recyclée et d'eau fraîche. En d'autres termes, sauf lorsque les animaux ne consomment pas d'eau l'injecteur reçoit 100% d'eau recyclée.
(rappelons que les animaux consomment toujours de l'eau, pour les stopper on doit éteindre la lumière).

Via la pompe 5 et le serpentin de dissolution 4, l'eau peut être dirigée vers la zone d'abreuvement, elle passe à l'extérieur du bac 8 comme on l'aura compris, en passant par le déverseur 6. Le déverseur est également situé hors du bain mais il peut arriver que pour des questions de place/logabilité le déverseur puisse être positionné dans l'eau du bac.

Comme on le voit sur la figure, l'installation permet si nécessaire de déverser une partie de l'eau provenant du serpentin dans le bac et l'autre partie vers l'abreuvement.

Comme il apparaitra clairement à l'homme du métier à la lecture de ce qui précède, l'installation proposée ici est remarquable en ce qu'elle offre :
- Un temps de séjour du mélange eau / O₂
- Une vitesse de l'eau dans le serpentin pour garantir une bonne dissolution de l'eau
- Une pression relativement elevée dans le serpentin
- Une pression relativement basse dans le circuit d'abreuvement.

Ceci grâce au système proposé de recyclage de l'eau comportant une pompe, un serpentin, un déverseur, un bac à ciel ouvert qui permet d'être à la pression atmosphérique.

Des essais comparatifs ont été effectués dans les conditions réelles suivantes:
- 2 bâtiments strictement identiques
- 25000 poulets environ par bâtiment
- un cycle d'élevage de 40 jours
- 3 séries d'essais

Teneur initiale de l'eau : 5 à 8 mg d'oxygène par litre d'eau (selon la température), Cible visée = 30 à 40 mg d'oxygène par litre d'eau.

La moyenne des 3 répétitions montre une augmentation de 5% de ICE et un GMQ de plus de 2g.
- « ICE » : Quantité totale d'aliment ingéré divisée par le nombre de kilos de volailles valorisables à l'abattoir
- « GMQ » : Gain Moyen Quotidien

Une autopsie comparative réalisée par un organisme spécialisé a permis de mettre en évidence sur les volatiles examinées une présence de moins de graisse abdominale (8 %) sur les animaux ayant consommé de l'eau enrichie en oxygène. Soit une orientation de leur métabolisme en faveur de la transformation en protéines plutôt qu'en matières grasses :

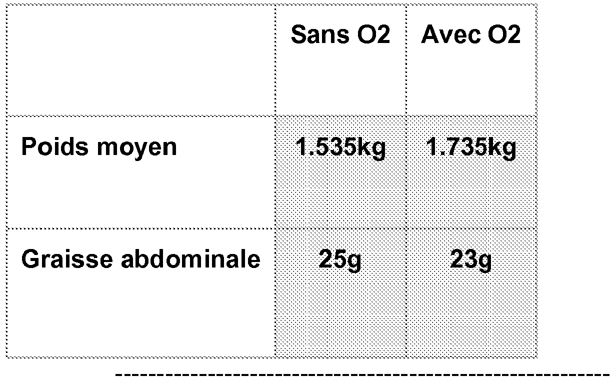

## Revendications

1. Installation d'élevage d'animaux et notamment de volailles et de porcins, comprenant des moyens d'amenée d'eau aux animaux pour leur abreuvement, moyens d'amenée comprenant :
- un injecteur (1) permettant d'injecter un gaz dans de l'eau ;
- une ligne d'arrivée d'eau (« EAU ») et une ligne d'arrivée de gaz (« GAZ »), parvenant dans l'injecteur (1); et
- un stockage d'oxygène ou d'un mélange gazeux comportant de l'oxygène, apte à délivrer de l'oxygène dans la ligne de gaz,
**se caractérisant en ce qu'**elle est dépourvue d'analyseur d'oxygène, et **en ce qu'**elle comprend les éléments suivants, permettant de mettre en place une boucle de recirculation d'eau :
- un bac d'eau (8) à la pression atmosphérique, l'injecteur (1) étant alimenté en eau à partir de l'eau située dans ce bac, bac qui peut être alimenté par ailleurs en eau neuve ;
- un serpentin (4) apte à recevoir de l'eau chargée en oxygène dissous en provenance de l'injecteur, eau qui parvient au serpentin grâce à une pompe (5), serpentin qui permet de créer un temps de contact eau/oxygène;
l'eau issue du serpentin transitant par un déverseur (6), pour pouvoir être dirigée en totalité vers l'abreuvement ou bien pour partie vers l'abreuvement et pour partie dans le bac (8).

2. Procédé d'élevage d'animaux et notamment de volailles ou de porcins, où de l'eau est fournie aux animaux pour leur abreuvement, **se caractérisant en ce que** l'on dispose d'une installation conforme à la revendication 1, et **en ce que** l'on dope l'eau d'abreuvement des animaux en oxygène dissous jusqu'à la saturation à l'aide de cette installation.

## Patentansprüche

1. Anlage zur Haltung von Tieren und insbesondere von Geflügel und Schweinen, die Wasserzufuhrmittel für die Tiere als Tränke umfasst, wobei die Zufuhrmittel Folgendes umfassen:
- eine Einspritzvorrichtung (1), mit der ein Gas in Wasser eingespritzt werden kann;
- eine Wassereinströmleitung ("Wasser") und eine Gaseinströmleitung ("Gas"), die in die Einspritzvorrichtung (1) hineingehen; und
- einen Speicher für Sauerstoff oder ein Gasgemisch, das Sauerstoff aufweist, der in der Lage ist, Sauerstoff in die Gasleitung abzugeben,
**dadurch gekennzeichnet, dass** sie keine Sauerstoffanalysevorrichtung aufweist und dadurch, dass sie die folgenden Mittel umfasst, mit denen eine Wasserumwälzanlage eingerichtet werden kann:
- einen Wasserbehälter (8) bei Umgebungsluftdruck, wobei der Einspritzvorrichtung (1) Wasser aus Wasser in diesem Behälter zugeführt wird, wobei dem Behälter darüber hinaus Frischwasser zugeführt werden kann;
- eine Rohrschlange (4), die Wasser aufnehmen kann, das mit gelöstem Sauerstoff versehen ist, der aus der Einspritzvorrichtung stammt, wobei das Wasser mit einer Pumpe (5) in die Rohrschlange gelangt, wobei die Rohrschlange für eine Kontaktzeit Wasser/Sauerstoff sorgt,
wobei das Wasser aus der Rohrschlange über einen Auslauf (6) läuft, damit es vollständig zur Tränke oder auch teilweise zur Tränke und teilweise in den Behälter (8) geleitet werden kann.

2. Verfahren zur Haltung von Tieren und insbesondere von Geflügel und Schweinen, wobei das Wasser den Tieren zum Trinken bereitgestellt wird, **dadurch gekennzeichnet, dass** eine Anlage nach Anspruch 1 vorgesehen wird und dadurch, dass das Tränkenwasser für die Tiere mit Sauerstoff versehen wird, der mithilfe dieser Anlage bis zur Sättigung gelöst ist.

## Claims

1. Installation for rearing animals and in particular poultry and pigs, comprising means for conveying water to the animals for their watering, which conveying means comprise:
- an injector (1) making it possible to inject a gas into water;
- a water inlet line ("WATER") and a gas inlet line ("GAS") arriving in the injector (1); and
- a store of oxygen or of a gas mixture comprising oxygen, capable of delivering oxygen into the gas line, which is **characterized in that** it is devoid of oxygen analyzer and **in that** it comprises the following elements, making it possible to set up a water recirculation loop:
- a water tank (8) at atmospheric pressure, the injector (1) being supplied with water from the water located in this tank, which tank can furthermore be supplied with new water;
- a coil (4) capable of receiving water charged with dissolved oxygen originating from the injector, which water arrives at the coil by virtue of a pump (5), which coil makes it possible to create a water/oxygen contact time;
the water resulting from the coil passing in transit through an overflow valve (6), in order to be able to be directed entirely to the watering or else partly to the watering and partly to the tank (8).

2. Method for rearing animals and in particular poultry or pigs, where water is supplied to the animals in order to water them, which is **characterized in that** an installation in accordance with Claim 1 is available and **in that** the water for watering the animals is boosted with dissolved oxygen up to saturation using this installation.
